# EUROPEAN PATENT APPLICATION

(11) **EP 0 937 938 A1**
(43) Date of publication of application: **25.08.1999**
(21) Application number: 99101449.9
(22) Date of filing: 27.01.1999
(51) Int. Cl.: F16L 41/00, B28D 1/14, E02D 29/12, F16L 41/08, E03F 3/04, B28D 1/04

(54) **A method of connecting a branch pipe with a mains pipe or manhole and a drilling device for forming the connecting aperture**

(30) Priority: 19.02.1998 SE 9800480
(71) Applicant: Forsheda AB, S-330 12 Forsheda (SE)
(72) Inventor: Gamstedt, Pontus, 331 40 Värnamo (SE)
(74) Representative: Linde, Leif

(57) **Abstract**

In a method for connecting a pipeline (30) with a pipe (2), preferably consisting of concrete and for example constituting a manhole, the pipeline having a smaller diameter than the pipe, the wall (6) of the pipe is provided with a through connection opening (8), and the pipeline is connected with the connection opening by means of a connection element (32) while sealing the pipeline in relation to the wall of the pipe. The wall (6) of the pipe (2) is at the connection opening (8) provided with an annular, substantially flat connection surface (12; 14) which is substantially parallel with the axis of the pipe, and the connection element (32) is connected with this connection surface. The invention relates also to a device in the form of a drill for providing the wall (6) of the pipe (2) with said connection opening (8) when the method according to the invention is performed.

## Description

The present invention relates to a method for connecting a pipeline with a pipe preferably consisting of concrete and forming for example a manhole, the pipeline having a smaller diameter than the pipe. The invention relates also to a device to be used when performing the method.

When connecting a pipeline with a pipe consisting of concrete and constituting for example a manhole, the wall of the pipe is provided with a through connection opening and the pipeline is connected with this connection opening by means of a connection element which is sealed in relation to the wall of the pipe. The connection element can for example be constituted by a sleeve which by means of a sealing ring is sealed against the wall of the pipe and into which the pipeline is introduced, the sealing between the sleeve and the pipeline being provided by means of a sealing ring which is compressed between the inner surface of the sleeve and the outer surface of the pipeline. In the prior art method of connecting a pipeline with the wall of the pipe it is a problem that the wall of the pipe constitutes a curved surface which makes it difficult to provide a tight connection between the pipeline and the wall of the pipe by means of the connection element. According to the prior art method it is also necessary to use different connection elements for connecting pipelines to pipes having different diameters as these different diameters provide that the pipe walls have different radius of curvature.

The object of the invention is to provide a method for connecting a pipeline with a pipe preferably consisting of concrete, the pipeline having a smaller diameter than the pipe, which method makes it easier to provide a tight connection between the pipeline and the pipe wall and in addition thereto makes it possible to use one and the same connection element for connecting the pipeline with the pipe wall even if the pipes have different diameters and the pipe walls thereby have different radii of curvature.

In order to comply with this object the method according to the invention is characterized in that the pipe wall is in connection with the connection opening provided with an annular, substantially flat connection surface which is substantially parallel with the axis of the pipe and with which the connection element is connected. The annular, substantially flat connection surface makes it possible to connect the connection element with the pipe wall without problems also when the pipe walls have different radii of curvature.

The annular, flat connection surface can be formed around the connection opening at the inner or outer surface of the pipe, but it is also possible to form annular, flat connection surfaces which are parallel with each other at the inner surface of the wall as well as at the outer surface of the wall. Thereby it is possible to arrange a groove radially outside the outer periphery of the annular, flat connection surface, and the connection element can be formed with an axially extending flange which is introduced into the groove when the connection element is connected with the connection opening. The groove can be used also for locking the connection element to the pipe wall in an efficient way. In the case that the wall is provided with annular, flat connection surfaces around the connection opening at the inner as well as at the outer surface of the wall, it is suitable to provide grooves radially outside the connection surface at the inner as well as at the outer surface of the wall and to let the connection element consist of two parts which are connected with one connection surface each at the inner and outer surface of the pipe wall and which each has one axially extending flange, the two portions of the connection element being connected with each other while the flanges of the portions are introduced into one groove each. This provides for an efficient and reliable locking of the connection device with the pipe wall. As an alternative the connection element can in this case consist of a sleeve which as a whole consists of rubber and at its ends has outwardly directed flanges engaging the annular connection surfaces and at its inner surface has annular sealing projections engaging the pipeline.

In an alternative embodiment of the method according to the invention the substantially cylindrical surface defining the connection opening is formed with an annular groove which at its side surfaces forms two opposite, annular, substantially flat connection surfaces. A sealing ring is positioned in this groove and is sealingly compressed between the surfaces defining the connection opening and the outer surface of the pipeline when the pipeline is introduced into the connection opening.

A device for performing the method according to the invention in order to provide a wall of a pipe preferably consisting of concrete with a connection opening and an annular, substantially flat connection surface preferably consists of a drill having a outer diameter corresponding to the diameter of the connection opening and a portion positioned at an axial distance from the point of the drill and projecting radially, which portion is provided with a cutting and/or grinding coating. Preferably, the radially projecting portion is annular, while the cutting and/or grinding coating is provided on a side surface of the annular portion, which extends transversely in relation to the axis of the drill and is turned towards the point of the drill. In the case that a groove shall be provided radially outside the outer periphery of the annular, flat connection surface the radially extending portion of the device can have at its radially outer portion an axially extending projection for cutting the groove radially outside the outer periphery of the annular, flat connection surface.

The method and the device according to the invention shall in the following be described with reference to the accompanying drawings.
Fig. 1 is a cross-section of a concrete pipe which according to the method of the invention is formed with a connection opening.
Fig. 2 is a side view of a concrete pipe shown in Fig. 1.
Fig. 3 shows on an enlarged scale a part of the pipe shown in cross-section in Fig. 1 in the area of the connection opening together with a device for providing the connection opening.
Fig. 4 is a section showing a pipeline connected with a pipe of the kind shown in Fig. 1 in accordance with the method of the invention.
Fig. 5 is a section of a concrete pipe having a connection opening of the design shown in Figs. 1 - 4 and a connection element in the form of a sleeve connected with said opening.
Fig. 6 is a section corresponding to Fig. 5 subsequently to the connection of a pipeline to the connection element shown in Fig. 5.
Fig. 7 is a cross-section of a part of a pipe consisting of a concrete having a modified embodiment of a connection opening for connecting a pipeline with the pipe.
Fig. 8 shows a modified embodiment of the method of the invention for connecting a pipeline with a pipe having a connection opening of the kind shown in Fig. 7.
Fig. 9 is a cross-section corresponding to Fig. 7 of a pipe having a further embodiment of a connection opening for connecting a pipeline with the pipe.
Fig. 10 shows a further embodiment of a method of the invention for connecting a pipeline with a connection opening formed in a pipe, the opening being of the kind shown in Fig. 9.
Fig. 11 is a cross-section corresponding to Figs. 7 and 9 of a portion of a pipe having a further embodiment of a connection opening for connecting a pipeline with the pipe.
Fig. 12 is a section corresponding to Fig. 11 in which the connection opening is provided with a sealing ring.

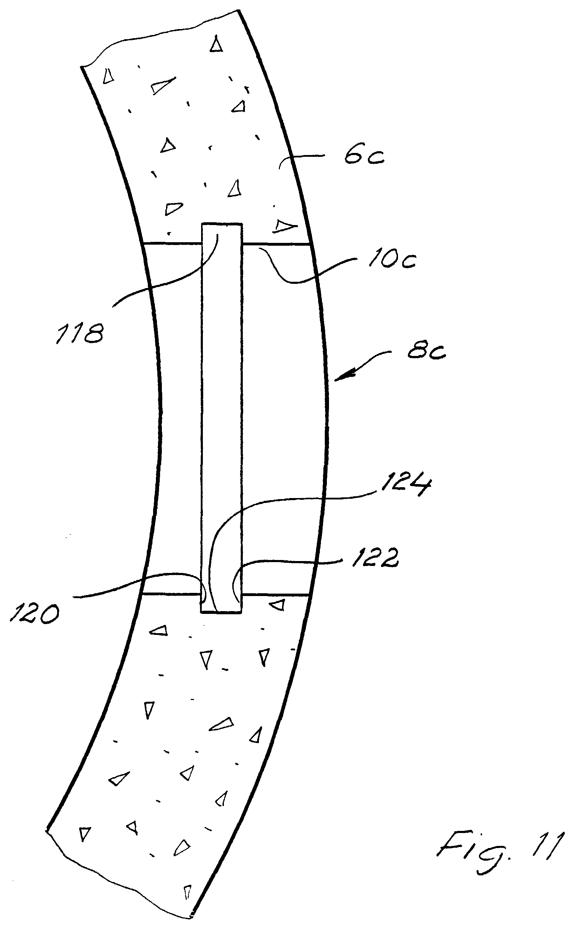

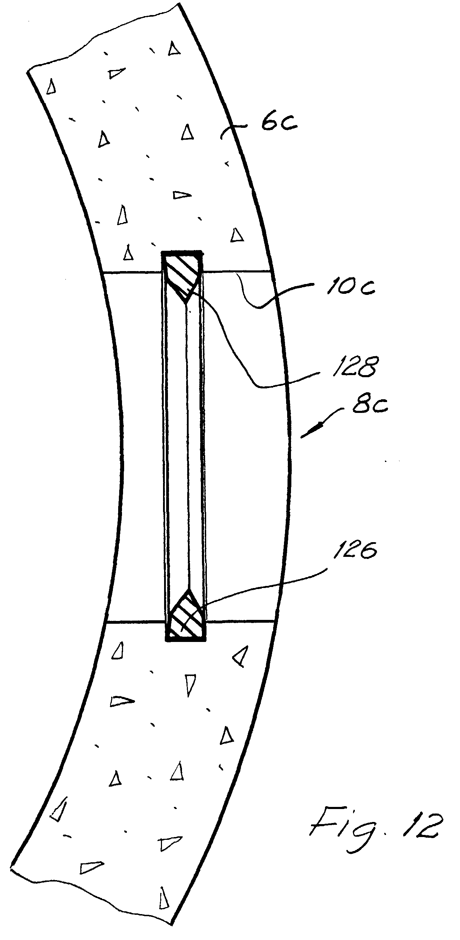

Fig. 12 shows a method of the invention for connecting a pipeline with the connection opening according to Figs. 11 and 12 provided with a sealing ring.

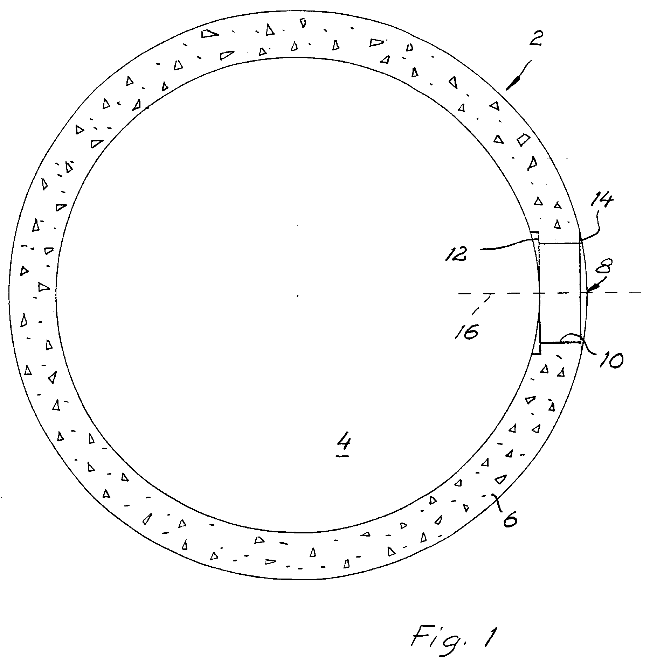

In Fig. 1 there is shown a cross-section of a pipe 2 consisting of concrete and having a bottom 4, the pipe being intended to be arranged in a vertical position for constituting a manhole. The wall 6 of the pipe 2 is formed with a connection opening 8 extending through the wall 6 for making it possible to connect with the pipe 2 a pipeline having a smaller diameter than the pipe. The connection opening 8 consists of a cylindrical portion 10, an inner, annular, flat connection surface 12 parallel with the axis of the pipe 2 and an outer, also annular, flat connection surface 14 parallel with the axis of the pipe. Thus, the inner connection surface 12 is parallel with the outer connection surface 14. The connection surface 12 positioned at the inner surface of the pipe wall 6 is arranged so that a plane 18 which extends through the axis of the pipe as well as through the axis 16 of the connection opening coincides with the inner surface of the wall 6. The connection surface 14 arranged at the outer surface of the pipe wall 6 is designed so that a plane 20 extending at a right angle in relation to the axis of the pipe and extends through the axis 16 of the connection opening has its outer periphery positioned in the outer surface of the wall 6 of the pipe 2.

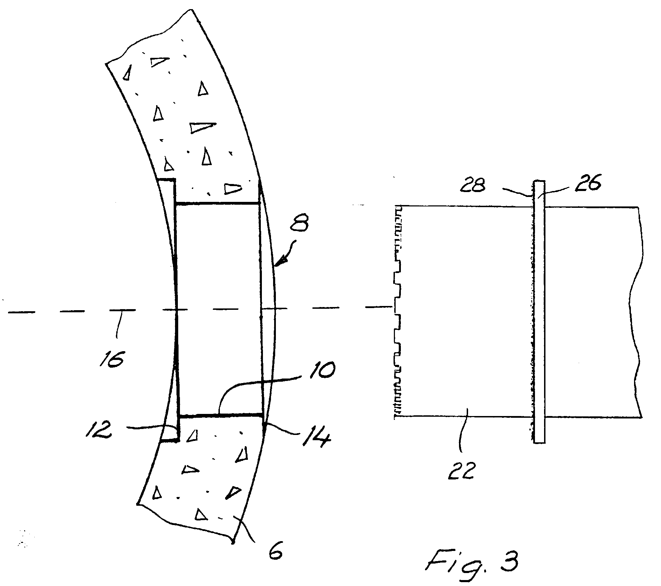

In Fig. 3 there is shown on an enlarged scale a portion of the pipe wall 6 including the connection opening 8 together with a device for providing the pipe wall 6 with said connection opening 8. The device is constituted to by a tubular drill 22 having an outer diameter which corresponds to the diameter of the cylindrical portion 10 of the connection opening 8. The drill 22 forms at its point a cutting edge 24 consisting of cutting edges of hard metal or the like. At a distance from its point 24 the drill 22 has an annular, radially projecting portion 26 which at a side surface 28 extending transversely in relation to the axis of the drill and facing the point 24 of the drill is provided with a cutting and/or grinding coating consisting of for example diamond particles. After the cutting edge 24 of the drill 22 has bored an opening in the concrete wall 6 having a diameter corresponding to the cylindrical portion 10 the annular portion 26 of the drill engages with its side surface 28 the wall 6 around the opening provided by means of the cutting edge 24 for cutting out the annular, flat connection surface 14 around the connection opening 8. When the connection surface 14 has been cut out in the pipe wall 6 the drill is introduced into the connection opening 8 in the cylindrical portion 10 thereof from the inner side of the pipe 2 so as to cut out the annular, flat connection surface 12 around the connection opening at the inner surface of the pipe 2 in a corresponding way.

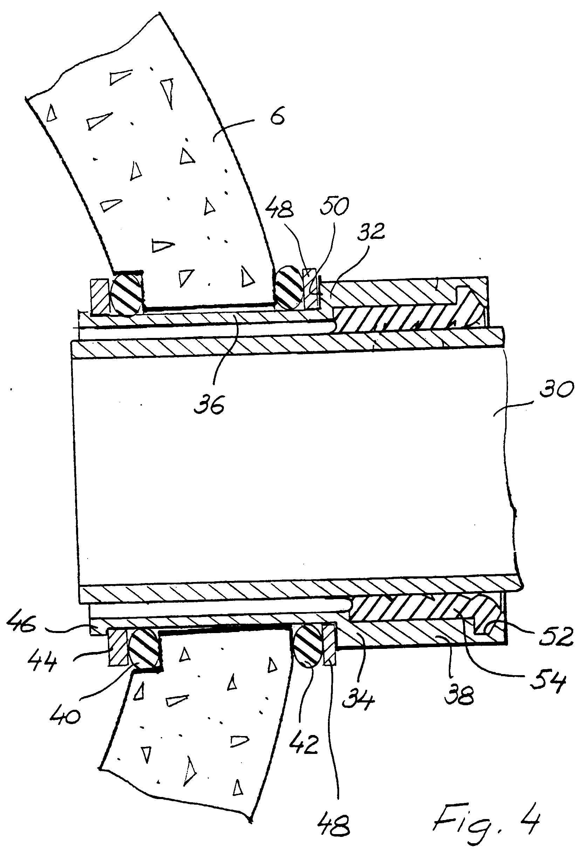

Fig. 4 illustrates the method of the invention for connecting a pipeline 30 with the connection opening 8 in the wall 6 of the pipe 2. According the method of the invention there is used a sleeve-shaped connection element 32 comprising a substantially cylindrical sleeve 34 consisting of a hard plastic material. The sleeve 34 has a portion 36 which is introduced into the connection opening 8 and has axially outside the portion 36 a portion 38 of a somewhat greater diameter than the portion 36. The portion 36 of the sleeve 34 supports two sealing rings 40 and 42 sealingly engaging the portion 36 of the sleeve 34 and each of the annular connection surfaces 12 and 14, respectively, of the connection opening. The sealing rings 40 and 42 are compressed against the annular connection surfaces 12 and 14, respectively, by means of a locking ring 44 engaging an annular projection 46 at the free end of the portion 36 of the sleeve 34 and by means of an intermediate ring 48 engaging a shoulder 50 on the sleeve 34. The locking ring 44 is positioned in its locking position after the portion 36 of the sleeve 34 has been introduced through the central portion 10 of the connection opening 8 and is constituted by a divided locking ring which can be positioned in its sealing position by being expanded and displaced over the annular projection 46. The intermediate ring 48 can be used for adapting the connection element 42 to different thicknesses of the wall 6 of the pipe 2 by using intermediate rings 48 of different thicknesses. Because of the flat design of the annular connection surfaces 12 and 14 it is without problems possible to provide a tight connection of the connection element 42 with the connection opening 8 of the pipe 2 in a simple way. The portion 38 of the sleeve 34 has at its inner surface a sealing ring 54 fixed in a groove 52 for sealing the sleeve 34 in relation to the end portion of the pipeline 30 introduced into the sleeve 34.

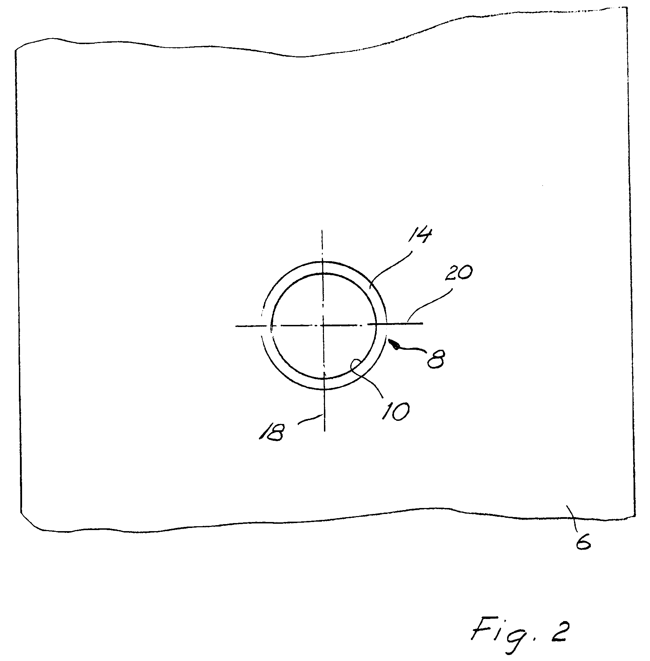

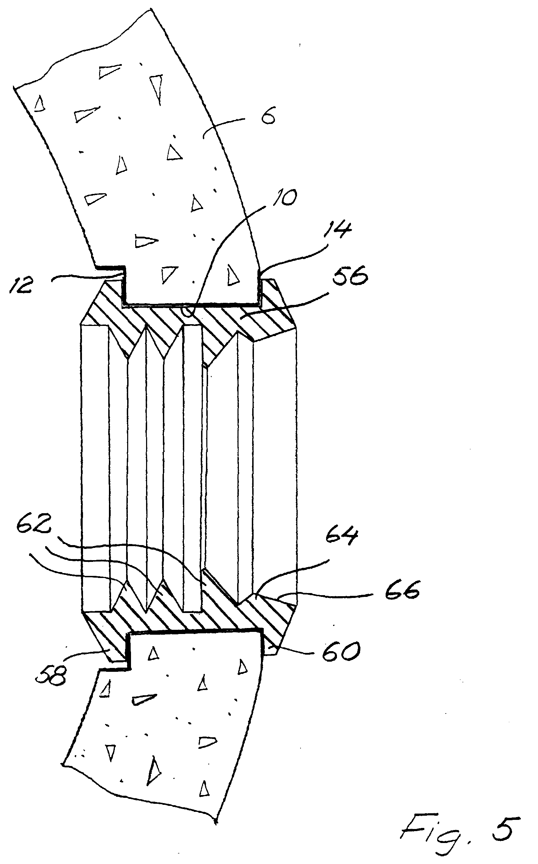

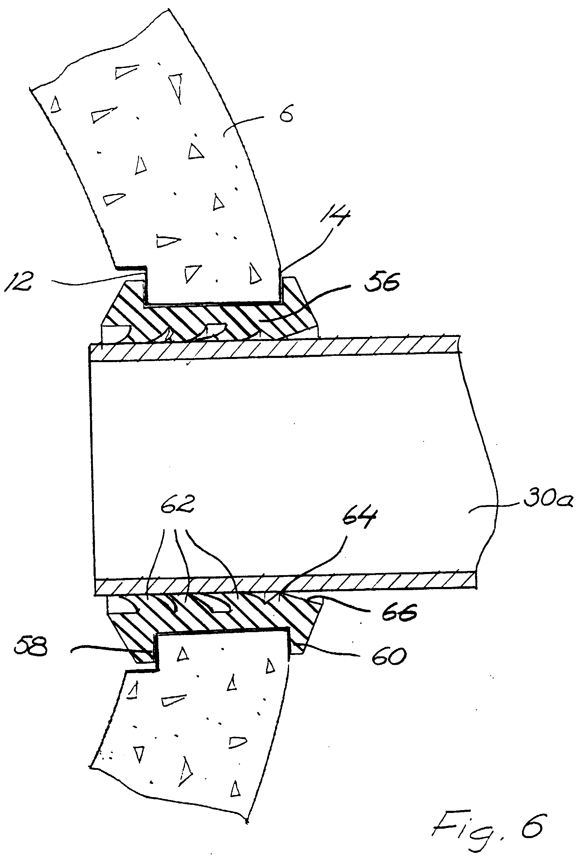

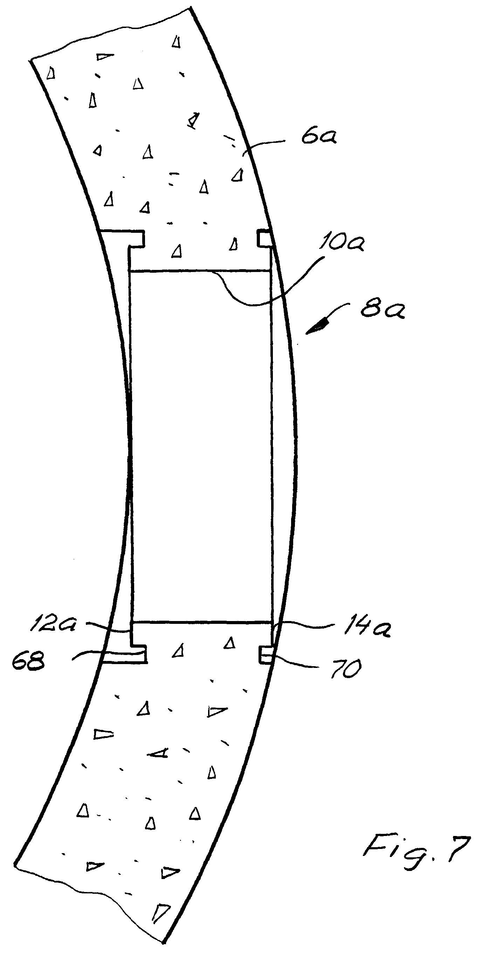

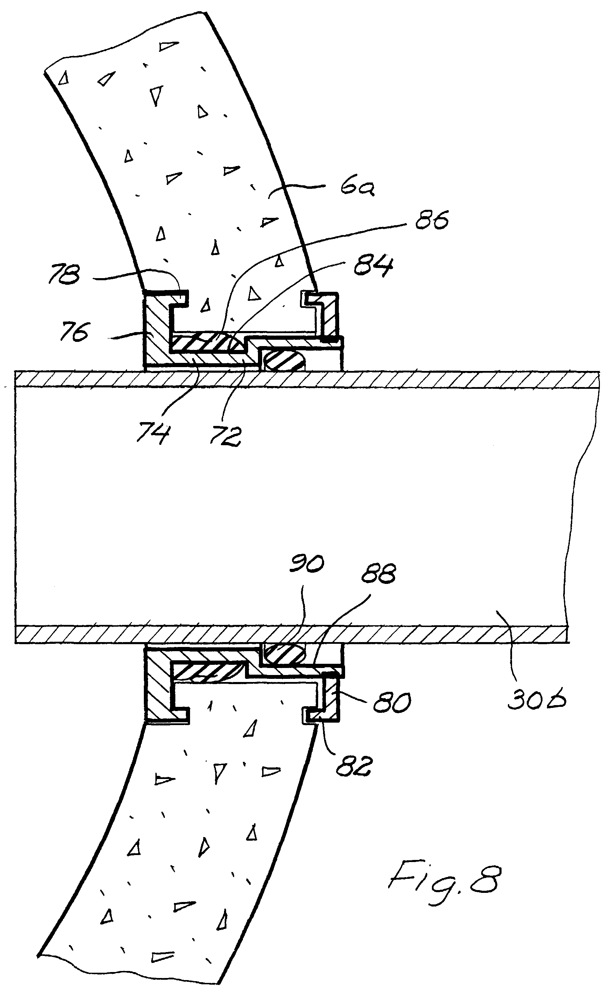

In Figs. 5 and 6 there is shown the method according to the invention to connect a pipeline 30 with a connection opening 8 consisting of a cylindrical portion 10 and annular connection surfaces 12 and 14, the connection opening 8 being of the same kind as the connection opening 8 in the embodiment according to Figs. 1 - 4, the connection being provided by means of a sleeve 56 completely consisting of rubber. The sleeve 56 consisting of rubber has at its ends annular, outwardly directed flanges 58 and 60 engaging each of the annular connection surfaces 12 and 14, respectively. In addition thereto the sleeve 56 consisting of rubber has three inwardly directed, annular sealing lips 62 sealingly engaging the outer surface of the pipeline 30a subsequently to the introduction of the pipeline 30a into the sleeve 56. The sleeve 56 has also an inwardly directed bead 64 having a conical surface 66 guiding the pipeline 30a to a concentric position in relation to the sleeve 56 when the pipeline 30a is introduced into the sleeve 56.

In Fig. 7 there is a shown a cross-section of a wall 6a of a concrete pipe constituting a manhole. The wall 6a is provided with a connection opening 8a comprising a cylindrical central portion 10a, an inner, annular, substantially flat connection surface 12a which is parallel with the axis of the pipe, and an outer, also annular and flat connection surface 14a which is also parallel with the axis of the pipe. At the peripherally outer part of the annular connection surfaces 12a and 14a the wall 6a is formed with peripherally extending grooves 68 and 70, respectively, having the object of facilitating the connection of a connection element with the wall 6a and the opening 8a. The grooves 68 and 70 can be cut out into the wall 6a simultaneously with the cutting of the annular connection surfaces 12a and 14a by providing a drill of the kind shown in Fig. 3 with an axially directed flange at the radially projecting portion 26 of the drill. Thus, also the grooves 68 and 70 are annular, flat and parallel with the axis of the pipe.

Fig. 6 shows the connection of the pipeline 30b with the connection opening 8a provided in the wall 6a in accordance with Fig. 5. According to the invention the connection of the pipeline 30a is conducted by means of a connection element 72 consisting of a substantially cylindrical portion 74, a radially projecting portion 76 engaging the inner, annular connection surface 12a and an axially directed flange 78 engaging the groove 68 as well as an annular portion 80 constituted by a separate part engaging the annular, outer connection surface 14a and having an axially directed flange 82 engaging the groove 70. The portion 80 including the flange 82 is releasably connected with the outer end of the cylindrical portion 74 by the fact that the inner periphery of the portion 80 engages a groove in the cylindrical portion 74. The connection element 72 has at its outer surface a peripherally extending groove 84 in which a sealing ring 86 is positioned, the sealing ring having the section of a half arrow. The connection element 72 is mounted in the connection opening 8a by introducing the part of the connection element comprising the portion 74, the portion 76 and the flange 78 from the inner side of the manhole into the connection opening 8a to the position according to Fig. 8, whereupon the part consisting of the portion 80 and the flange 82 is connected with the cylindrical portion 74 by being arranged in the position according to Fig. 8. The pipeline 30b is thereupon introduced into the connection element 72, the sealing between the pipeline 30b and the connection element 72 being provided by means of a sealing ring 90 positioned in an inner groove 88 in the connection element 72. The design of the connection opening 8a including the annular connection surfaces 12a and 14a and the grooves 68 and 70 as shown in Figs. 7 and 8 provides that the connection element 72 can be of a simple shape and can in spite thereof be connected with the pipe wall 6a in a reliable way.

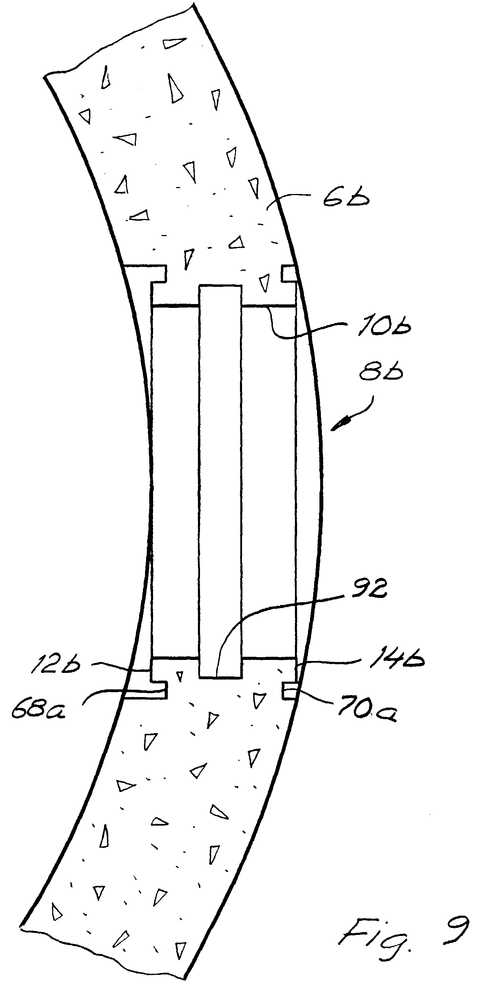

Fig. 9 shows a cross-section corresponding to Fig. 7 of the wall 6b of a concrete pipe constituting a manhole. The wall 6b is formed with a connection opening 8b which like the connection opening 8a according to Fig. 5 has a cylindrical central portion 10b, an inner, annular, flat connection surface 12b parallel with the axis of the pipe and an outer, annular, flat connection surface 14b which is also parallel with the axis of the pipe and grooves 68a and 70a provided at the outer periphery of the annular connection surfaces 12b and 14b, respectively. The connection opening 8b according to Fig. 9 differs from the connection opening 8a according to Fig. 7 by the fact that the connection opening 8b has at its cylindrical portion 10b a central groove 92.

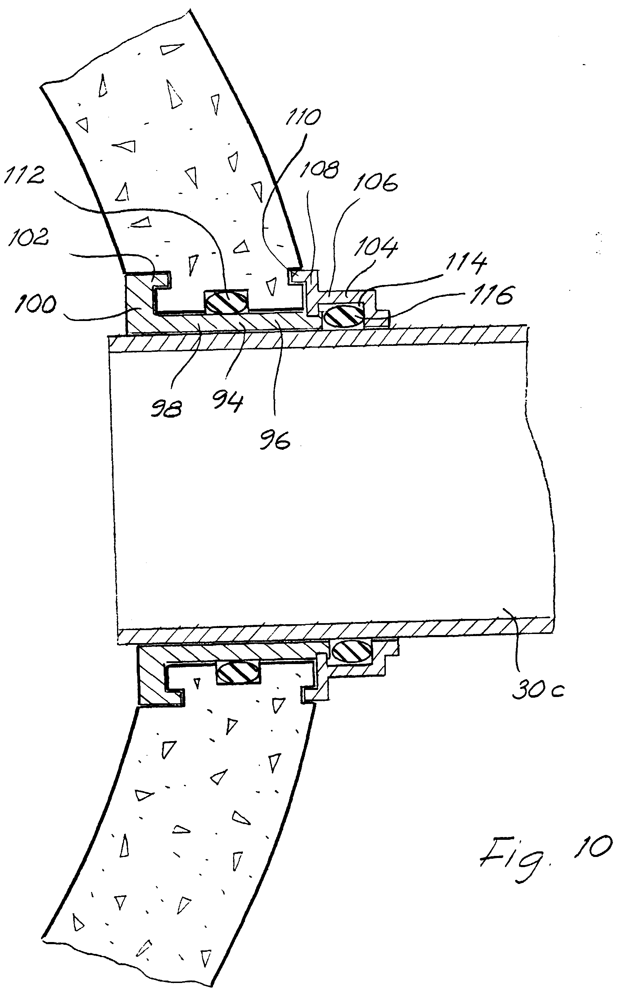

As appears from Fig. 10 the connection opening 8b is used for connecting a pipeline 30c by means of a connection element 94. The connection element 94 consists of two parts, a first part 96 having a cylindrical portion 98 connecting with the central portion 10b of the connection opening 8b, a radially projecting portion 100 connecting with the inner, annular surface 12b and an axially directed flange 102 engaging the groove 58. In addition thereto the connection element 94 has a second part 104 having a cylindrical portion 106, a portion 108 radially projecting therefrom and engaging the outer annular connection surface 14b, and an axially directed flange 110 engaging the groove 70a. The connection element 94 is connected with the connection opening 8b by introducing the part 96 of the connection element into the connection opening 8b from the inner side of the manhole to the position shown in Fig. 10, whereupon the part 104 of the connection element is connected with the part 96 by arranging the inner periphery of the radially directed portion 108 into a peripherally extending groove at the outer end of the cylindrical portion 98 of the part 96. The sealing between the connection element 94 and the pipe wall is provided by means of a sealing ring 112 positioned in the groove 92, while the sealing between the pipeline 30c and the connection element 94 is provided by means of a sealing ring 116 arranged in a groove 114 in the part 104 of the connection element.

In Fig. 11 there is shown a cross-section of a wall 6c of a concrete pipe constituting a manhole, the cross-section corresponding to Figs. 7 and 9. The wall 6c has a connection opening 8c comprising a substantially cylindrical opening wall 10c having at the central part thereof an annular groove 118 including two opposite, annular, substantially flat connection surfaces 120 and 122 and a cylindrical bottom surface 124.

As shown in Fig. 12, there is in the groove 118 arranged a connection device in the form of a sealing ring 126 having an inwardly directed sealing projection 128.

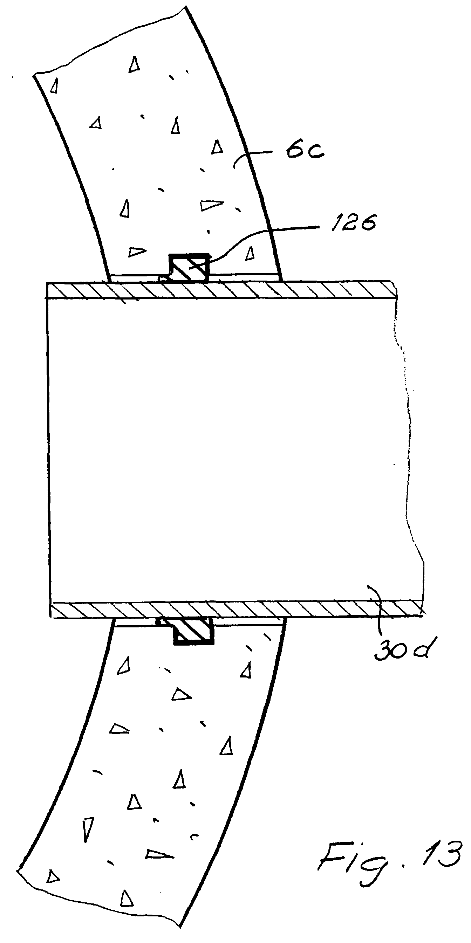

The connection of the pipeline 30d with the connection opening 8c is provided by introducing the pipeline into the connection opening 8c in accordance with Fig. 13 which provides for a compression of the sealing ring 126 between the outer surface of the pipeline 30d and the surfaces defining the connection opening 8c.

By the fact that the wall of the concrete pipe is in connection with the connection openings provided with one or more annular, substantially flat connection surfaces parallel with the axis of the pipe according to the method of the invention there is, as appears from above, provided for a simple way of connecting a pipeline with the connection opening formed in the concrete pipe.

The invention can be modified within the scope of the following claims.

## Claims

1. A method of connecting a pipeline (30) with a pipe (2), preferably consisting of concrete and forming for example a manhole, the pipeline having a smaller diameter than the pipe, wherein the wall (6) of the pipe is provided with a through connection opening (8) and the pipeline is by means of a connection element (32; 56; 72; 94; 126) connected with the connection opening while being sealed in relation to the wall of the pipe, **characterized** in that the wall (6) of the pipe (2) is at the connection opening (8) provided with an annular, substantially flat connection surface (12; 14; 120; 122) which is parallel with the axis of the pipe and to which the connection element (32; 56; 72; 94; 126) is connected.

2. A method as claimed in claim 1, **characterized** in that the annular, flat connection surface (12; 14) is formed around the connection opening (8) at the inner or outer surface of the wall (6).

3. A method as claimed in claim 1, **characterized** in that annular, flat connection surfaces (12, 14) which are parallel with each other are formed at the inner surface and at the outer surface of the wall (6).

4. A method as claimed in claim 2 or 3, **characterized** in that a connection surface (12) positioned at the inner surface of the wall is formed so that the connection surface is in a plane (18) through the axis of the pipe (2) as well as the axis (16) of the connection opening (8) positioned in the inner surface of the wall (6) and that a connection surface (14) positioned at the outer surface of the wall is formed so that the connection surface has in a plane which extends perpendicular to the axis of the pipe (2) and extends through the axis of the connection opening (8) its outer periphery positioned in the outer surface of the wall (6) of the pipe.

5. A method as claimed in any of the preceding claims, **characterized** in that a connection element in the form of a sleeve (56) consisting of rubber-elastic material is positioned in the connection opening (8).

6. A method as claimed in any of claims 2 - 5, **characterized** in that the connection opening (8) in the wall of the pipe and the annular, flat connection surface (12; 14) are produced by means of a drill (22) having a diameter corresponding to the diameter of the connection opening and which at a distance from the point (24) of the drill has a radially projecting portion (26) for producing the flat connection surface (12; 14).

7. A method as claimed in any of claims 2 - 4, **characterized** in that a groove (68; 70) is provided radially outside the outer periphery of the annular, flat connection surface (12; 14) and that the connection element (72; 94) is provided with an axially extending flange (78, 82; 102, 110) which is introduced into the groove when the connection element is connected with the connection opening (8).

8. A method as claimed in claims 3 and 7, **characterized** in that grooves (68; 70) are produced radially outside the connection surface (12) positioned at the inner surface of the wall as well as outside the connection surface (14) positioned at the outer surface of the wall, that the connection element (72; 94) comprises two parts (74, 80; 96, 104) provided with one axially directed flange each and adapted to be connected with each of the connection surfaces positioned at the inner and the outer surface of the pipe wall and that the two parts of the connection element are connected with each other while the flanges (74, 82; 102, 110) of the parts are introduced into each of the grooves (68; 70).

9. A method as claimed in claim 8, **characterized** in that a sealing ring (66; 90; 116) is applied in a groove (64; 88; 114) in the connection element (32; 72; 94) or against a shoulder formed in said groove and that the pipeline (30) is introduced into the connection element while the sealing ring is sealingly compressed between the connection element and the outer surface of the pipeline.

10. A method as claimed in any of the preceding claims, **characterized** in that the substantially cylindrical surface (10c) of the connection opening (8c) is formed with an annular groove (118) which at its side surfaces constitutes two opposite, annular, substantially flat connection surfaces (120; 122), that a sealing ring (126) is positioned in the groove and that the pipeline (30c) is introduced into the connection opening while the sealing ring is compressed between the surfaces of the groove and the outer surface of the pipeline.

11. A device for performing the method according to any of claims 1 - 9, for providing a wall (6) of a pipe (2), preferably consisting of concrete, with a connection opening (8) and an annular, substantially flat connection surface (12; 14), **characterized** in that the device consists of a drill (22) having an outer diameter corresponding to the diameter of the connection opening and having at an axial distance from the point (24) of the drill a radially projecting portion (26) provided with a cutting and/or grinding coating (28).

12. A device as claimed in claim 11, **characterized** in that the radially projecting portion (26) is of annular shape and that the cutting and/or grinding coating (28) is positioned at a side surface of the annular portion, which extends transversely of the axis of the drill and is turned towards the point (24) of the drill.

13. A device as claimed in claim 11 or 12, **characterized** in that the radially projecting portion has at its radially outer part an axially directed projection for cutting a groove (68; 70) radially outside the outer periphery of the annular, flat connection surface (12; 14).

14. A device as claimed in any of claims 11 -13, **characterized** in that the drill (22) is of tubular shape and forms at its point (24) an annular, cutting edge.
